# EUROPÄISCHE PATENTSCHRIFT

(11) **EP 2 332 269 B1**
(45) Veröffentlichungstag und Bekanntmachung des Hinweises auf die Patenterteilung: **26.02.2014**
(21) Anmeldenummer: 09778071.2
(22) Anmeldetag: 24.08.2009
(51) Int. Cl.: H04B 10/114

(54) **IDENTIFIKATIONSELEMENT MIT EINEM OPTISCHEN TRANSPONDER**
IDENTIFICATION ELEMENT HAVING AN OPTICAL TRANSPONDER
ÉLÉMENT D'IDENTIFICATION COMPRENANT UN TRANSPONDEUR OPTIQUE

(30) Priorität: 01.09.2008 DE 102008045142; 13.10.2008 DE 102008050988
(43) Veröffentlichungstag der Anmeldung: 15.06.2011
(60) Teilanmeldung: 13001577.9
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2009/006124
(87) Internationale Veröffentlichungsnummer: WO 2010/022906

(56) Entgegenhaltungen:
- EP-A2- 1 107 161
- WO-A1-03/019502
- US-A- 5 633 742
- US-A1- 2005 040 241
- US-A1- 2005 258 939
- US-A1- 2006 256 070
- US-A1- 2007 035 381
- US-A1- 2007 132 592

## Beschreibung

Die Erfindung betrifft ein Identifikationselement mit einem Transponder nach dem Oberbegriff des Anspruches 1.

Induktiv arbeitende Transponder sind hinlänglich bekannt. Sie werden in vielen Fällen als Zugangskontrolle, z.B. an Sicherheitstüren, eingesetzt. Vor der Tür befindet sich ein sogenannter Kartenleser. Zum Betreten des gesicherten Raumes muss der Benutzer ein kleines berechtigendes Element, oft in Form einer Scheckkarte, nahe an den Kartenleser halten. Durch die unmittelbare Nähe kann induktiv Leistung in die Karte eingespeist werden. Die Karte selbst gibt daraufhin zur Identifizierung induktiv ein digitales Datenwort zurück an den Kartenleser. Dieser vergleicht das Datenwort mit seinen gespeicherten Daten und betätigt bei entsprechender Übereinstimmung das Türöffnungssystem. Bei ähnlichen Systemen kann durch den Kartenleser auch das aktuelle Datenwort auf der Karte verändert, z.B. modifiziert werden. Nachteilig bei diesen Systemen ist, dass jedes Mal die Karte unmittelbar an den Leser gehalten werden muss, um z.B. eine Tür zu öffnen. Dies bedingt ein Stoppen des Bewegungsablaufes, ein Hervorholen der Berechtigungskarte, das Halten der Karte vor den Kartenleser, bis die Kartenleseeinrichtung z.B. den Zugang freigegeben hat. Danach muss die Karte wieder entsprechend in ihre Ausgangsposition, z.B. in die Hosentasche, zurückgeführt werden.

Transponder mit Funkübertragung würden zwar eine größere Reichweite garantieren, aber da Funkwellen schlecht gerichtet werden können und andererseits auch durch Wände und Decken gehen, ist die Anwendung eines Funk-Transponders nicht sicher. Außerdem würde dann bei berechtigten Personen, die z.B. an der Tür nur vorbeigehen, die Tür regelmäßig unbeabsichtigt geöffnet werden.

Der Wunsch, einfach auf eine Tür zuzugehen, die sich dann schon bei entsprechender Berechtigung in einiger Entfernung öffnet, stellt sich z. B. oft in Krankenhäusern. Ist der Transponder im oft schon sowieso vorhandene Namensschild einer zugangsberechtigten Person untergebracht, kann diese z.B. ein Krankenbett vor sich herschieben und die zu durchschreitende Tür öffnet sich z.B. schon in 5 m Entfernung. Dadurch wird der Bewegungsablauf nicht gestört und es wird entsprechend Zeit gespart. Die Möglichkeit der präzisen Richtungsgebung des optischen Lichtstrahles bringt in dieser Situation einen wesentlichen Vorteil: nur die berechtigte Person, die auch auf die Tür zugeht, aktiviert diese auch aus größerer Entfernung, während Personen mit gleicher Zugangsberechtigung, die in unmittelbarer Nähe an der Tür vorbeigehen, diese nicht aktivieren. Die stationäre Einrichtung für den Transponderbetrieb kann sich auch wettergeschützt hinter einer Isolierglasscheibe (2-fach Glas mit Zwischenraum) befinden. Ein wesentlicher Zeitvorteil ergibt sich auch bei Personen, die berufsbedingt schnell durch Türen gehen müssen, ohne sich durch das Herausholen einer Zugangsberechtigung und das Anhalten an das Lesegerät aufzuhalten. Dies ist oft an Flughäfen gewünscht, da hier besonders auf zeitsparendes Arbeiten geachtet wird.

Ein weiterer Vorteil ergibt sich bei der Verwendung eines optischen Transponders bei gesicherten Parkplätzen. Der optische Transponder kann innen im Fahrzeug hinter der Scheibe angebracht werden, beim Vorbeifahren an einem entsprechenden Lesegerät und erkannter Zugangsberechtigung wird die Fahrzeugschranke betätigt und das Fahrzeug eingelassen. Hier entfällt das Abbremsen bis zum Stillstand, das Heranreichen der Berechtigungskarte an das Lesegerät und erneutes Wiederanfahren.

Optische Systeme zur Zugangskontrolle sind zwar auch im Markt bekannt, sie benötigen in der Regel eine manuelle Auslösung eines Schalters zur Aktivierung. Systeme, die ohne manuelle Aktivierung auskommen, haben sich wegen der bisher benötigten Größe, bzw. dem Gewicht der benötigten Batterien und der damit verbundenen Betriebskosten nicht im Markt durchsetzen können.

Sendeeinheiten für optische Signale im Infrarotbereich sind allgemein bekannt. Fernbedienungen, insbesondere für TV und dergleichen arbeiten in der Regel mit codiertem Infrarotlicht. Diese Sendeeinheiten werden durch Tastendruck aktiviert und senden dann für die kurze Zeit des Tastendrucks oder für eine vorbestimmte Zeit codierte Lichtimpulse, also ihr Datenwort aus. Ein binäres Datenwort besteht in der Regel aus den Impulsen 0 und 1, wobei meist eine 0 ein kurzer Impuls und eine 1 ein langer Impuls oder zwei Impulse hintereinander sind. Zum Erreichen hoher Reichweiten wird für kurze Zeit ein entsprechend hoher Strom durch die Sendeelemente, meistens Leuchtdioden, geschickt. Die Pulslänge beträgt in der Regel einige zig µs, sodass ein relativ hoher Durchschnittsstrom während des Sendebetriebes erreicht wird. In der Praxis erreicht dieser Strom bei einer Versorgungsspannung von z.B. 3V während der Datenübertragung einige zig- bis mehrere hundert Milliampere. Daher sind diese Geräte mit einer "kräftigen" Batterie versehen und nur für sporadischen Betrieb geeignet. Ein Dauerbetrieb würde die Batterie in kurzer Zeit entleeren.

Ein optisches Datenübertragungsgerät für eine Einrichtung mit einem Empfänger, der an einem Standort der Einrichtung angeordnet ist, sowie mit einer Vielzahl tragbarer Sender, welche von einer Vielzahl entsprechender Personen getragen werden, ist aus der dem Oberbegriff des Anspruches 1 zu Grunde liegenden EP 1 229 672 B1 bekannt. Dieses Datenübertragungsgerät besteht aus einem Bewegungsdetektor, welcher an dem Standort angeordnet ist, und einer Vielzahl optischer drahtloser Datenverbindungen zwischen dem Empfänger und einer Vielzahl von Sendern, wobei jeder Sender einen einmaligen Identifikationscode sowie Mittel für das Betätigen eines Alarms aufweist. Der Alarm wird ausgelöst, wenn eine Person am Standort durch den Bewegungsdetektor festgestellt wird, welche keinen Sender mit Identifikationscode aufweist, der anzeigt, dass der Person Zugang zu dem Standort gewährt werden darf. Für ein 21 Bit Datenwort ist dort eine Sendezeit von 288 µs bei einer Wiederholrate von minimal zwei Sekunden vorgesehen. Die Erfahrung zeigt, dass bei langen Datenwörtern und damit derart langen Sendezeiten mehr Energie für die Übertragung der Informationen bereitgestellt werden muss. Zudem sind Mittel zur Signalerkennung bei Kollision von Daten in Folge einer Signalüberlagerung erforderlich. Dies ist auf Grund der Überlappung der zeitlich relativ langen Datenwörter leicht gegeben.

Die EP 1 804 220 A1 zeigt ein Verfahren zur berechtigten Gewährung eines Dienstes und ein portables Gerät zu dessen Durchführung ohne optische Datenübertragung. Die Kommunikationsverbindung zwischen portablen Gerät und dem Medium ist für den Nahbereich vorgesehen. Das portable Gerät überträgt über mehrere verschiedene Kommunikationsverbindungen ein oder mehrere Kennzeichen, damit ein Zugang zu dem Dienst freigeschalten wird. Der Einsatz der Kommunikationsverbindung im Nahbereich ermöglicht dem Bediener kein Durchschreiten einer Tür, ohne seinen Bewegungsablauf zu unterbrechen. Der Bediener muss bei Nutzung des Dienstes sich mit dem portablen Gerät hin zum Medium bewegen.

Aus der DE 10 2005 062 632 A1 ist eine automatische Verwaltung für den Aufenthalt von Personen in Räumlichkeiten von Gebäuden bekannt, bei denen die Zugangsberechtigung auf einem Identifikationselement am Zugang des Gebäudes programmiert wird. Einzelne Zugangskontrolleinrichtungen überprüfen dann diese Information. Dies erfolgt vorzugsweise dadurch, dass die Identifikationselemente optisch, akustisch, magnetisch und/oder elektronisch erfassbare, individualisierbare Kennungen erhalten. Ein Transponder wird vor allem dann eingesetzt, wenn es um eine elektronisch erfassbare Kennung geht, bei der von einer stationären Sende-/Empfangseinrichtung ein Signal ausgesendet wird, welches den Transponder bzw. die entsprechende Sende-/Empfangseinrichtung des Identifikationselementes dazu anhält, ein die individualisierte Kennung umfassendes Signal auszusenden. Dieses Signal wird dann seitens der stationären Einrichtung zur Steuerung des Zugangs erfasst. Wird mit optischen Mitteln gearbeitet, so wird lediglich eine Kennung auf das Identifikationselement aufgedruckt, die dann vor Ort vom Identifikationselement gelesen wird. Eine optische Übertragung z.B. durch Lichtstrahlung erfolgt dabei nicht.

Ausgehend von diesem Stand der Technik ist Aufgabe der Erfindung die Schaffung eines kleinen optischen Transponders, der einen geringen Energiebedarf hat und keine Batterien benötigt.

Diese Aufgabe wird durch ein Identifikationselement mit einem optischen Transponder mit den Merkmalen des Anspruches 1 gelöst.

Dazu wird ein optischer Transponder verwendet, dessen Sendeeinheit eine Licht aussendende Sendeeinheit ist und dessen ggf. vorhandene Empfangseinheit eine Licht empfangene Empfangseinheit ist. Ferner wird eine autarke Energieversorgung vorgesehen, wobei der optische Transponder und die autarke Energieversorgung im Identifikationselement integriert sind. Dadurch kann ein optischer ggf. bidirektionaler Transponder geschaffen werden, der ohne Batterie auskommen kann und eine wesentlich größere Reichweite besitzt als die bekannten induktiven Transponder. Außerdem ist er vorzugsweise auf Distanz programmierbar. Zudem erlaubt eine optische Lösung eine Einschränkung des Sendewinkels.

Der im Identifikationselement integrierte optische Transponder kann also nur eine Sendeeinheit oder bei z.B. erhöhten Sicherheitsanforderungen sowohl eine Sendeeinheit als auch eine Empfangseinheit aufweisen. In beiden Fällen sendet die Sendeeinheit kontinuierlich zumindest zeitabschnittsweise, z.B. mit einer bestimmten Frequenz oder in einem bestimmten Takt optische Signale selbsttätig aus, d.h. eine manuelle Betätigung wie z.B. bei einer Fernbedienung erfolgt nicht. Dennoch und gerade trotz der dauernden Aussendung der optischen Signale ist eine Integration in ein verhältnismäßig kleines Identifikationselement wie ein Namensschild möglich. Besitzt der optische Transponder nur eine Sendeeinheit, so kann auch alternativ eine Empfangseinheit vorgesehen sein, die Funkwellen von ihrem Gegenüber empfängt. Die Sendeeinheit des optischen Transponders ist von der Steuerschaltung so betrieben ist, dass sie mehrmals pro Sekunde optische Impulse kleiner gleich 100 Nanosekunden sendet.

Vorteilhaft ist bei der Übertragung von Informationen die Verwendung von kurzen Datenwörtern und Sendezeiten, denn je kürzer das zu übertragende Datenwort bzw. die Sendezeit ist, desto geringer ist der notwendige Energiebedarf für die Übertragung der Daten. Kürzere Übertragungszeiten ermöglichen eine störungsfreie Informationsweitergabe, da so eine Überlagerung der Datenwörter bei Übertragung und Verwendung mehrerer Transponder vermieden werden kann.

Die Größe wird dadurch so reduziert, dass er zum Beispiel die Form eines üblichen Namensschildes hat. Bei einem schnellen Zugehen einer Person auf eine Tür soll diese frühzeitig genug öffnen, und den Bewegungsablauf der entsprechenden Person nicht zu behindern. Dazu ist eine entsprechend hohe Reichweite des optischen Transponders notwendig. Die Reichweite im praktisch ausgeführten Ausführungsbeispiel betrug mindestens 6 m. Das Datenwort des optischen Transponders soll auch optisch auf eine gewisse Entfernung, im Ausführungsbeispiel also 6 m, verändert werden können.

Bei nicht so hoher Anforderung an die Sicherheit oder aus anderen Gründen kann selbstverständlich auf die bidirektionale Funktion verzichtet werden. Dann sendet der Transponder sein Datenwort z.B. 10 mal in der Sekunde ohne weitere Funktionen aus. Bei sehr hohen Sicherheitsanforderungen kann zwischen der stationären Sicherheitseinrichtung und dem transportablen optischen Transponder auch ein über die hier beschriebenen Funktionen hinausgehender Datenaustausch stattfinden.

Weitere Vorteile ergeben sich aus den Unteransprüchen und der nachfolgenden Beschreibung bevorzugter Ausführungsbeispiele.

Im Folgenden wird die Erfindung an in den beigefügten Figuren dargestellten Ausführungsbeispielen näher erläutert. Es zeigen:
- Fig. 1: ein Namensschild mit optischem Transponder,
- Fig. 2: das zugehörige Blockschaltbild des optischen Transponders mit einer optischen Programmierfunktion,
- Fig. 3: die Ladeschaltung mit Vorzugsberechtigung,
- Fig. 4: den zeitlichen Ablauf der Funktionen in der stationären Sicherheitseinrichtung,
- Fig. 5: die zeitlichen Funktionen im optischen Transponder,
- Fig. 6: den Leistungsverbrauch PWR (Power) einer Empfangs- bzw. einer Sendeeinheit bei einer Pulsbreite von einigen Millisekunden (ms) bis zu einigen Nanosekunden (ns),
- Fig. 7: die Funktion der stationären Sicherheitseinrichtung,
- Fig. 8: die Funktion des optischen Transponders,
- Fig. 9: die Empfangs- und Sendeeinheit der stationären Sicherheitseinrichtung,
- Fig. 10: eine schematische Ansicht eines Kartenlesers mit vorgeschaltetem Konvertierungsmodul.

### Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

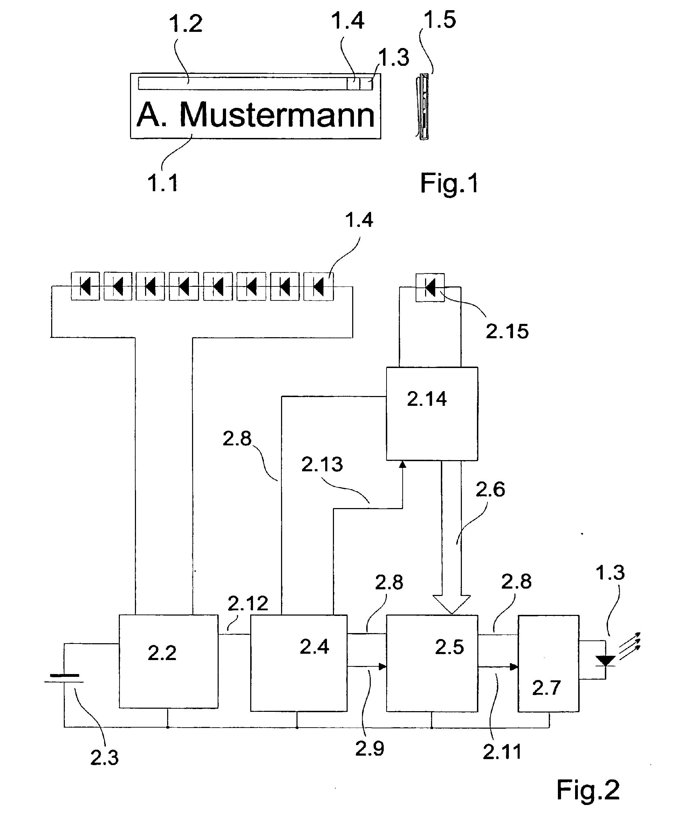

Die Figuren und insbesondere Fig. 1 zeigen ein Identifikationselement, das vorzugsweise die Form eines Namensschilds oder eines einem Objekt oder Körper zugeordneten oder an diesem zu tragenden Kennzeichnungs- oder Identifikationselements vorzugsweise vergleichbarer Größe hat, d.h. das Identifikationselement ist regelmäßig verhältnismäßig klein. Es kann z.B. ähnlich wie bei einem Garagentoröffner auch an einem Fahrzeug angeordnet sein und identifiziert dann das Fahrzeug oder die darin befindliche Person hinsichtlich ihrer Zugangsberechtigung, ohne dass eine manuelle Auslösung erforderlich ist. Es weist einen optischen Transponder 1.1 mit einer Daten aussendenden Sendeeinheit 1.3 und ggf. mit einer Daten empfangenen Empfangseinheit, zur Kommunikation mit einer Einrichtung zur Erfassung und/oder Steuerung einer Zugangsberechtigung zu Räumen oder Objekten auf. Sendeeinheit und die ggf. vorhandene Empfangseinheit des optischen Transponders arbeiten auf optischem Wege, d.h. die Sendeeinheit sendet Daten als Lichtsignal aus und die Empfangseinheit empfängt Licht als Signale bzw. Daten. Besitzt der optische Transponder nur eine Sendeeinheit, kann alternativ auch eine Empfangseinheit vorgesehen sein, die Funkwellen von ihrem Gegenüber empfängt. Dabei sind der optische Transponder und eine autarke Energieversorgung im Identifikationselement integriert.

Der im Identifikationselement integrierte optische Transponder kann also nur eine Sendeeinheit 1.3 oder bei z.B. erhöhten Sicherheitsanforderungen sowohl eine Sendeeinheit als auch eine Empfangseinheit 1.4 aufweisen. In beiden Fällen sendet die Sendeeinheit kontinuierlich zumindest zeitabschnittsweise, z.B. mit einer bestimmten Frequenz oder in einem bestimmten Takt optische Signale selbsttätig aus, d.h. eine manuelle Betätigung wie z.B. bei einer Fernbedienung erfolgt nicht. Dennoch und gerade trotz der dauernden Aussendung der optischen Signale ist eine Integration in ein verhältnismäßig kleines Identifikationselement wie ein Namensschild möglich.

Fig. 1 zeigt ein Namensschild mit optischem Transponder. Im Bereich 1.2 ist die Solarzelle untergebracht, die als autarke Energieversorgung dient. Im Ausführungsbeispiel besteht sie aus einer Anordnung von acht Photodioden, z.B. BPW 34 der Fa. Osram. Alternativ kann die autarke Energieversorgung auch durch wenigstens eine in das Identifikationselement, also z.B. in das Gehäuse 1.1 des Namensschilds integrierte Batterie gebildet sein, die einen Betrieb von mehr als einem Jahr gewährleistet. In 1.3 befindet sich das optische Sendeelement, z.B. eine (IR-) Leuchtdiode. 1.4 ist die Photodiode zum Empfang der von der stationären Sicherheitseinrichtung ausgesandten Information. Das Gehäuse 1.1 kann aus beliebigem Material bestehen und dient nur zur Aufnahme der Elektronik. 1.5 zeigt die schematische Seitenansicht (Schnitt) mit der üblichen Klammer zum Befestigen an der Kleidung. Im Innenraum ist die nur 1.5 mm dicke Elektronik untergebracht. Wie zu erkennen ist, muss das Namensschild nicht dicker oder größer sein als ein übliches Namensschild ohne irgendwelche Elektronik.

Fig. 2 zeigt das zugehörige Blockschaltbild eines optischen Transponders im Ausführungsbeispiel mit einer optischen Programmierfunktion. Die Anordnung der acht Photodioden der Solarzelle 2.1 liefert bei mäßiger Beleuchtung eine Spannung von ca. 8 x 0,4 V, also 3.2 Volt bei einem Strom von wenigstens 100 µA. Die Spannungsversorgung des Transponders beträgt 2 - 3 V.

In der Ladeschaltung 2.2 wird die von der Solarzelle 2.1 gelieferte Spannung bevorrechtigt dem Taktgenerator 2.4 zugeführt. Die Vorzugsbevorrechtigung bedeutet, das bei leerem Akku 2.3 nicht erst durch lange Ladung die erforderliche Spannung von z.B. mindestens 2.0 V erreicht werden muss, sondern dass auch bei vollständig entleertem Akku erst der Taktgenerator 2.4 mit den daran angeschlossenen weiteren Elektronikstufen 2.5, 2.7 und 2.14 mit der nötigen Spannung versorgt wird. Der dabei nicht verbrauchte, also überschüssige Strom wird dann dem Akku 2.3 zugeleitet. Bei fehlender Beleuchtung der Solarzelle 2.1 und zumindest zum Teil geladenem Akku übernimmt dann dieser die Stromversorgung für 2.4, 2.5, 2.7 und 2.14. Die Stufe 2.5 ist die Datenwortgenerierungsstufe und enthält eine Steuerschaltung für die Sendeeinheit (optisches Sendeelement 1.3) und die Empfangseinheit (Photodiode 1.4) sowie ggf. einen Mikroprozessor, vorzugsweise einen FPGA (Field Programmable Gate Array). Hier kann auch eine Speichereinheit und eine Programmiereinrichtung vorgesehen sein.

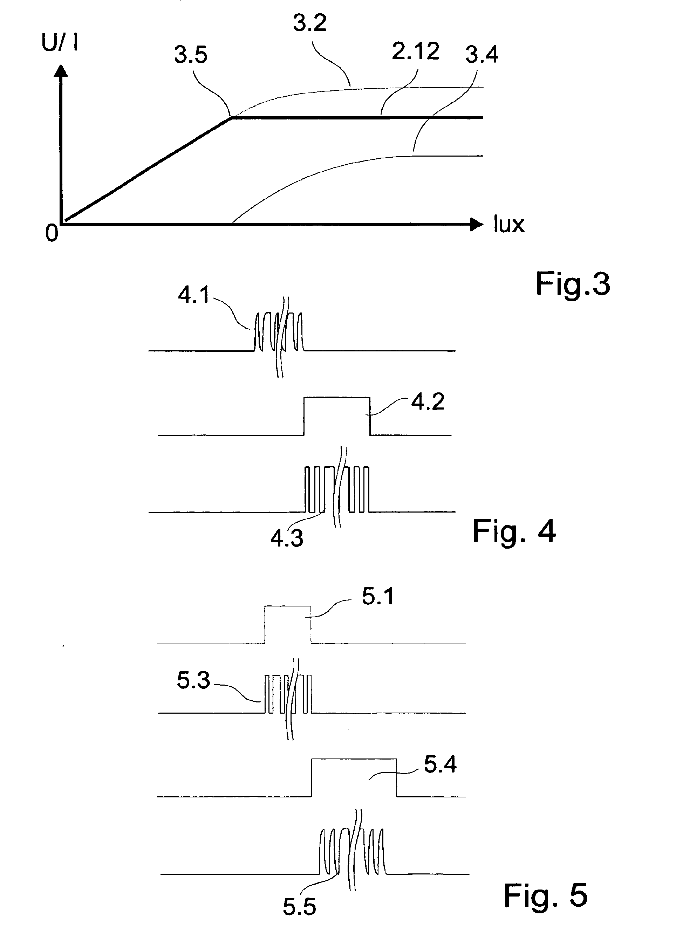

Fig. 3 erläutert die Ladeschaltung mit Vorzugsberechtigung 2.2.

Die Kurve 3.2 startet im gemeinsamen Nullpunkt von Spannungsversorgung 2.12 und der Kurve 3.2 selbst. Sie zeigt den Spannungsverlauf an der Solarzelle 2.1 bei ansteigender Beleuchtung ohne Belastung der Solarzelle. Bei ansteigender Beleuchtung steigt die Spannung so lange an, bis der Aktivierungspunkt 3.5 für den Ladestrom des Akkus 2.3 erreicht wird. Dies ist die nötige Spannungsversorgung 2.12 für den Taktgenerator 2.4, bzw. der Betriebsspannung 2.8 für die weiteren Stufen des Transponders. Diese Spannung der Spannungsversorgung 2.12 wird ab dem Aktivierungspunkt konstant gehalten und der Transponderelektronik als Spannung zugeführt. Der weitere theoretische Spannungsanstieg 3.2 wird in einen Ladestrom 3.4 für den Akku 2.3 umgewandelt. Dadurch wird dem Akku bei schwacher Beleuchtung erst ein Ladestrom zugeführt, wenn die Transponderelektronik mit der notwendigen Betriebsspannung versorgt ist. Dies hat den Vorteil, dass das Namensschild nach längerer Lagerung in Dunkelheit auch bei schwacher Beleuchtung sofort einsatzbereit ist.

Bei entsprechender Beleuchtung oder geladenem Akku wird die Spannungsversorgung 2.12 für den Taktgenerator 2.4 aktiviert. Der Taktgenerator 2.4 beinhaltet vorzugsweise einen Quarzoszillator mit nachgeschaltetem Frequenzteiler. Die durch den Quarz gegebene Genauigkeit dient zur Aussendung der optischen Datenworte in immer exakt dem gleichen Abstand. Dies ist von Vorteil für den Empfang der optischen Daten in stark gestörter Umgebung oder bei bidirektionalem Betrieb mehrerer Transponder gleichzeitig. Die Erläuterung dazu erfolgt in der Beschreibung des Empfängers.

Über 2.9 aktiviert der Taktoszillator 2.4 den Start für die Übertragung des optischen Datenwortes. Zur Einsparung von Energie werden die weiteren Stufen Datenwortgenerierung 2.5 und LED-Treiberstufe 2.7 nur während der Aussendung des Datenwortes mit der Betriebsspannung 2.8 versorgt. Die Datenwortgenerierung 2.5 erzeugt das entsprechende Datenwort 2.11 und gibt es an die LED-Treiberstufe 2.7, die mit entsprechendem Strom die LED 1.3 treibt. Das Datenwort kann fest durch die Hardware vorgegeben oder auch programmierbar sein. Für einen bidirektionalen Datenaustausch wird nach Aussenden des Datenwortes 2.11 mit dem Taktgenerator 2.4 über 2.13 die Empfangseinheit 2.14 aktiviert. Diese Aktivierung wird einige µs vor der erwarteten optischen Datenübertragung gestartet, um Umladevorgänge in den beteiligten Kondensatoren abzuschließen. Die Länge der Aktivierung der Empfangsstufe 2.14 hängt von der gewünschten Datenübertragung ab, sollte jedoch im Sinne eines geringen Durchschnittsstromverbrauchs kurz gehalten werden. Ein entsprechend e-nergiesparsamer Betrieb kann alternativ auch mit einer Empfangseinheit zum Empfang von Funkwellen erreicht werden.

Im Ausführungsbeispiel ist für den Empfang der optischen Daten eine eigene Photodiode 1.4 vorgesehen. Selbstverständlich können auch bei geeigneter Elektronik die Photodioden 2.1 für den Empfang eingesetzt werden.

Die empfangenen Daten 2.6 werden der Stufe 2.5 zugeführt und können dort z.B. das Datenwort 2.11 in entsprechender gewünschter Weise beeinflussen. Dazu kann in der Stufe 2.5 z.B. ein Mikroprozessor, vorzugsweise ein FPGA vorgesehen sein. Vorzugsweise kann über diesen Weg auch die Grundprogrammierung des optischen Transponders erfolgen. Mit anderen Worten können so die Daten insbesondere des optischen Transponders 1.1 durch eine bidirektionale Kommunikation mit der Einrichtung zur Erfassung und/oder Steuerung der Zugangsberechtigung beeinflusst werden. Nach Aussendung des Datenwortes schaltet sich in diesem Ausführungsbeispiel der optische Transponder bis zur nächsten Aktivierung durch den Taktoszillator 2.4 selbständig ab.

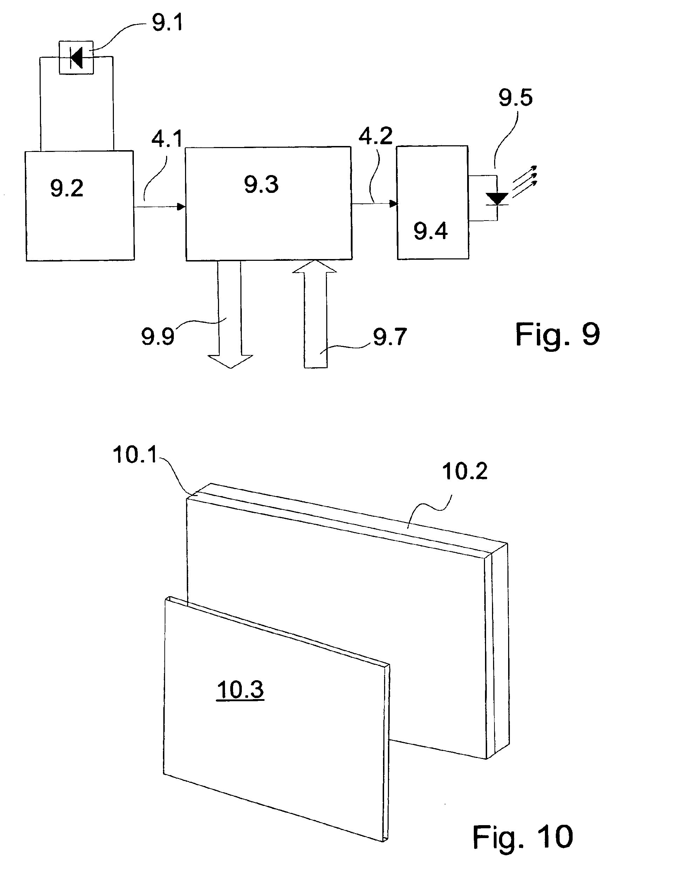

Die Empfangs- und Sendeeinheit der stationären Sicherheitseinrichtung ist in Fig. 9 dargestellt. Mit die Photodiode 9.1 und der Empfangselektronik 9.2 wird das vom Transponder ausgesandte optische Signal empfangen und der Datenverarbeitung 9.3 zugeleitet. Zur Störunterdrückung kann die Datenverarbeitung 9.3 nur Daten zulassen, die eine genau bestimmte Zeit nach der Erkennung eines gültigen Datenwortes auftreten. Dazu wird zunächst das von der Photodiode 9.1 und der Empfangselektronik 9.2 empfangene Signal ständig auf ein gültiges Datenwort überprüft. Ist dieses erst einmal aufgefunden, kann ein zweites Datenwort nur nach einem durch den Oszillator, vorzugsweise Quarzoszillator, im Transponder erzeugten Zeitraum wieder auftreten. Die Datenverarbeitung 9.3 verfügt über eine gleichwertige Zeitbasis und lässt dann nur die in dem entsprechenden Zeitraum auftretenden Daten zur Überprüfung zu.

Nach einem als gültig erkannten Datenwort in der stationären Sicherheitseinrichtung sendet die Sendestufe 9.4 der stationären Einheit mit dem aussendenden Element 9.5, z.B. einer Leuchtdiode ein eigenes Datenwort an den Transponder. Dieses Datenwort kann z.B. eine Programmierung des Transponders oder der Transponderdaten beinhalten. Vorteilhaft ist dieses Verfahren, wenn mehrere Personen z.B. gleichzeitig durch eine Sicherheitsschleuse gehen, und jeder Person individuelle Informationen optisch auf ihren Transponder "geschrieben" werden sollen. So ist es z.B. auch möglich die optischen Transponder mit zusätzlichen Informationen zu versehen, die zum Beispiel die abgelaufene Zugangsberechtigung einer dritten Person betreffen, die allen Zugangssicherungssystemen auch auf diesem Weg mitgeteilt werden kann und soll.

Fig. 4 zeigt den zeitlichen Ablauf der Funktionen in der stationären Sicherheitseinrichtung. Das vom Transponder optisch gesendete Signal ist nach dem Empfang in der Empfangselektronik 9.2 als empfangenes Signal 4.1 dargestellt. Nach Bestätigung der Gültigkeit in der Datenverarbeitung kann z.B. über die entsprechende Datenkommunikation 9.9 mit einer Steuerelektrik für eine Tür oder einem Zentralrechner der Durchgang freigegeben werden. Weiterhin kann nach einem gültigen Datenwort für den Zeitabschnitt 4.2 die Sendestufe 9.4 aktiviert werden. Sie sendet dann ein entsprechendes Datenwort 4.3, das z.B. über die Datenkommunikation 9.7 mit einem Zentralrechner vorgegeben wird.

Die zeitlichen Funktionen im optischen Transponder gemäß Fig. 2 zeigt Fig. 5. Über den Taktoszillator 2.4 wird die Stufe 2.5 zur Erzeugung des Datenwortes 5.3 im Zeitabschnitt 5.1 gestartet. Am Ende der Aussendung wird für den Zeitraum 5.4 die Transponder-Empfangseinheit 2.14 über 2.13 aktiviert. Das von der stationären Sicherheitseinrichtung nach Empfang eines gültigen Datenwortes ausgesandte eigene Datenwort ist als empfangenes Signal im Transponder als Kurvenform 5.5 dargestellt. Dieses empfangene Datenwort kann nun z.B. das originäre zu sendende Datenwort des Transponders entsprechend modifizieren.

Das vom Transponder ständig ausgesandte Datenwort kann auch nur ein "Aktivierungscode" für den stationären Empfänger sein, der dann wiederum ein spezielles Datenwort aussendet, das den optischen Transponder veranlasst, sein eigentliches Sicherheitsdatenwort auszusenden. Durch diese Maßnahme kann ein unbefugtes "Mithören", oder in diesem Fall optisches Ausspähen eines Datenwortes verhindert werden. Der "Aktivierungscode" für den Empfänger muss z.B. nicht besonders verschlüsselt sein, es reicht z.B. ein 8 Bit Code aus. Erst die eigentliche Identifizierung erfolgt dann mit einer wesentlich höheren Datenrate. Dadurch ist eine bidirektionale Kommunikation gewährleistet, die bei entsprechender Auslegung eine hohe Sicherheit bietet.

Die Größe des Identifikationselements kann durch die autarke Energieversorgung, die keine Batterie ist, und diese Maßnahmen so reduziert werden, dass der Transponder zum Beispiel in Form eines üblichen Namensschildes hergestellt werden kann. Bei einem schnellen Zugehen einer Person auf eine Tür soll diese frühzeitig genug öffnen und den Bewegungsablauf der entsprechenden Person nicht behindern. Dazu ist eine entsprechend hohe Reichweite des optischen Transponders notwendig. Die Reichweite betrug im Ausführungsbeispiel mindestens 6 m. Das Datenwort des optischen Transponders soll auch optisch auf eine gewisse Entfernung, im Ausführungsbeispiel also 6 m, verändert werden können.

Bei nicht so hoher Anforderung an die Sicherheit oder aus anderen Gründen kann selbstverständlich auf die bidirektionale Funktion verzichtet werden. Dann sendet der Transponder sein Datenwort z.B. 10 mal in der Sekunde ohne weitere Funktionen aus. Bei sehr hohen Sicherheitsanforderungen kann zwischen der stationären Sicherheitseinrichtung und dem transportablen optischen Transponder auch ein über die hier beschriebenen Funktionen hinausgehender Datenaustausch stattfinden.

Sendeeinheiten für optische Signale im Infrarotbereich sind allgemein bekannt. Fernbedienungen, insbesondere die Fernbedienungen für TV und dergleichen arbeiten in der Regel mit codiertem Infrarotlicht. Diese Sendeeinheiten werden durch Tastendruck aktiviert und senden dann für die kurze Zeit des Tastendrucks oder für eine vorbestimmte Zeit codierte Lichtimpulse, also ihr Datenwort, aus. Zum Erreichen hoher Reichweiten wird für kurze Zeit ein entsprechend hoher Strom durch die Sendeelemente, meistens Leuchtdioden, geschickt. Die Pulslänge beträgt in der Regel einige zig µs, sodass ein relativ hoher Durchschnittsstrom während des Sendebetriebes erreicht wird. In der Praxis erreicht dieser Strom bei einer Versorgungsspannung von z.B. 3V während der Datenübertragung einige zig- bis mehrere hundert Milliampere. Daher sind diese Geräte mit einer "kräftigen" Batterie versehen und nur für sporadischen Betrieb geeignet. Ein Dauerbetrieb würde die Batterie in kurzer Zeit entleeren.

Eine weitere Anforderung ist die Reaktionsgeschwindigkeit. Ein schnelles Zugehen auf eine Tür muss entsprechend schnell erkannt werden, um rechtzeitig die Zugangsberechtigung zu prüfen und die Tür zu öffnen. Dies lässt sich nur gewährleisten, wenn die Wiederholrate des optischen Datenwortes entsprechend hoch ist, z.B. 10 mal in der Sekunde. Nach einem gegenseitigen Erkennen der stationären Sicherheitseinrichtung und des transportablen Transponders kann dann bei Bedarf der weitere Datenaustausch wesentlich öfter erfolgen.

Diese Anforderungen stellen jedoch eine große Hürde dar, insbesondere wenn es sich um ein optisches System handelt, das aus der Ferne auch noch optisch programmierbar sein soll.

### Lösungsmöglichkeit 1:

Der optische Transponder ist ständig in Empfangsbereitschaft. Er sendet nur dann sein Datenwort aus, wenn er ein speziell codiertes optisches Signal empfängt, das von der stationären Sicherheitseinrichtung, z.B. einer Tür ausgesandt wurde.

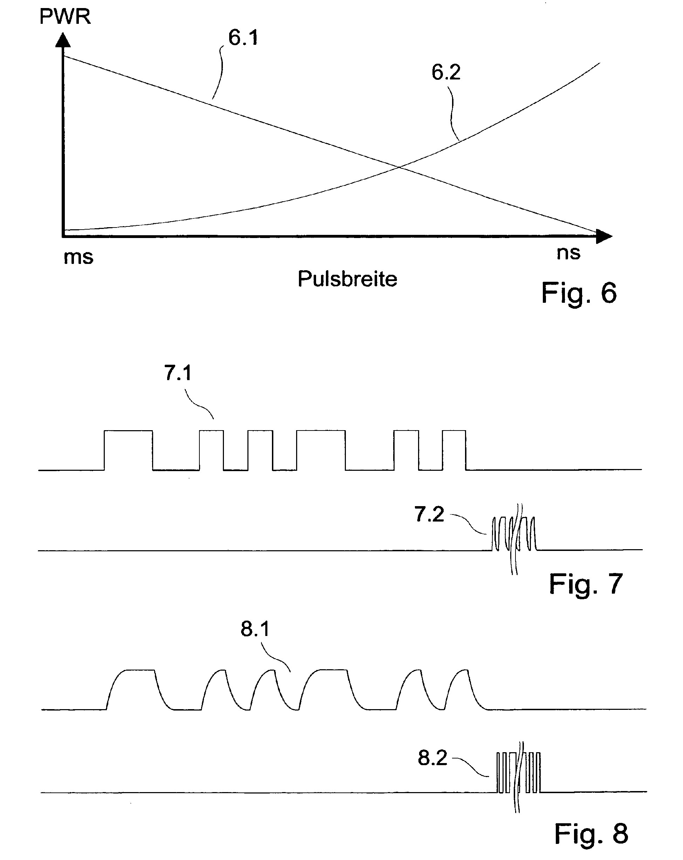

Dazu ist jedoch folgendes zu beachten: Fig. 6 zeigt schematisch den Leistungsverbrauch PWR (Power) einer Empfangs- bzw. einer Sendeeinheit bei einer Pulsbreite von einigen Millisekunden (ms) bis zu einigen Nanosekunden (ns). Die Kurve 6.1 zeigt den Leistungsverbrauch der Sendestufe. Bei "langen" Sendepulsen im Millisekundenbereich verbraucht diese Sendestufe mehr Energie als bei nur kurzer Aussendung im Nanosekundenbereich. Umgekehrt verhält es sich bei der Empfangsstufe. Deren Leistungsverbrauch in Abhängigkeit von der zu empfangenen Pulsbreite zeigt Kurve 6.2. Nach heutigem Stand der Technik verbraucht eine Empfangsstufe mehr Energie, wenn die Bandbreite erhöht wird, also bei sehr kurzen Impulsen im Nanosekundenbereich.

Der Darstellung gemäß wäre also für einen permanenten Empfang im optischen Transponder eine stromsparende Empfangstechnik zu wählen. Dies ist gegeben, wenn die ausgesendeten Impulse also relativ lang sind. Da der Sendestrom in der stationären Sicherheitseinrichtung, z.B. einer Tür, leicht bereitgestellt werden kann, wäre dieses Konzept eine Möglichkeit, den Transponder bei Türannäherung aufzuwecken, sodass er sein Datenwort abgeben kann. Eine Empfangsstufe im Transponder kann dann mit einem relativ kleinen Strom von z.B. 20 µA betrieben werden, um optische Pulse mit einer Bandbreite von z.B. 2 kHz, entsprechend einer Pulsbreite im Bereich von einigen zig Mikrosekunden, zu empfangen. Nach Auswertung dieser empfangenen optischen Signale, also dem Datenwort zur Aktivierung des Senders im Transponder, kann vom optischen Transponder wiederum ein Datenwort mit "stromsparenden" Impulsen im Nanosekundenbereich ausgesendet werden. Der "schnelle" Empfänger dafür kann mit seinem relativ hohen Stromverbrauch wiederum problemlos in der stationären Sicherheitseinrichtung, z.B. der Tür, untergebracht werden.

Diese Funktion zeigen Fig. 7 und Fig. 8.
Fig. 7 stellt die Funktion der stationären Sicherheitseinrichtung dar, Fig. 8 die Funktion des optischen Transponders. Die relativ "langen" Sendepulse 7.1 der stationären Sicherheitseinrichtung führen im Empfänger des Transponders zu einem entsprechenden Empfangssignal 8.1. Dieses enthält das Datenwort zum Aufwecken des Transponders, indem die Datenwortgenerierung / Steuerschaltung 2.5 die Sendeinheit nach Eingang eines Datensignals über die Empfangseinheit aktiviert. Die mögliche Tiefpasswirkung des Empfängers ist durch die Verrundung der Kanten im empfangenen Signal dargestellt. Andersherum verhält es sich, wenn der Transponder das Signal 8.1 empfangen hat und nun selbst wieder ein Datenwort 8.2 aussendet. Dies wird in der stationären Sicherheitseinrichtung als Signal 7.2 empfangen, was bei entsprechender Berechtigung z.B. eine Tür öffnet.

Zwei Argumente sprechen jedoch gegen diese Vorgehensweise. Erstens treten im niederfrequenten optischen Spektrum, in dem ja das Datenwort 7.1 liegt, deutliche Störungen durch Leuchtstofflampen besonders im Bereich von < 50 Hz bis über 500 kHz auf und würden daher einen ungestörten Betrieb des Transponders erschweren. Zweitens muss permanent ein Empfänger im Transponder in Betrieb sein. Dieser braucht nach Stand der Technik noch mindestens 20 µA, also einen Stromverbrauch, der für einen Betrieb mit kleiner Batterie oder Solarzelle zu hoch ist.

Weiterhin sollte in vielen Fällen der optische Transponder nicht nur sein eigenes Datenwort senden, sondern auch selbst wieder ein anderes Datenwort, das von der Sicherheitseinrichtung ausgesendet wird, empfangen und entsprechend verarbeiten, z.B. für eine Programmierfunktion. Bidirektionale bzw. programmierbare Systeme sind besonders gefragt, wenn z.B. stark erhöhte Sicherheit gegen unbefugtes Betreten gefordert wird.

Diese Anforderungen zusammen mit der Forderung eines möglichst geringen Stromverbrauchs führen zu einem etwas anderen Konzept: Um diese Leistungsmerkmale zu gewährleisten, sind besondere Maßnahmen erforderlich, wenn auf einen Batteriebetrieb verzichtet wird.

### Lösungsmöglichkeit 2:

Diese ist anhand eines Ausführungsbeispiel in Fig. 1 näher erläutert. In diesem Ausführungsbeispiel sendet der Transponder regelmäßig ein 24 Bit Datenwort mit kurzen Pulszeiten, gefolgt von einer Empfangsphase für ein 24 Bit Datenwort mit ebenso kurzen Pulszeiten aus. Der Transponder nach Fig. 1 ist in der Größe eines handelsüblichen Namensschildes ausgebildet. Die Dicke beträgt ca. 2.2 mm. Um eine immerwährende Verfügbarkeit zu gewährleisten, wird auf einen Batteriebetrieb verzichtet. Die Stromversorgung erfolgt durch eine kleine Solarzelle mit Accu. Die mögliche Fläche 1.2 für die Solarzelle beträgt im Ausführungsbeispiel z. B. nur 50 x 3 mm.

Weiterhin ist zu gewährleisten, dass der Transponder bei schlechter Raumbeleuchtung, bzw. mit einer täglichen Beleuchtungszeit von nur 3 - 4 Stunden und mäßiger Helligkeit noch eine Reserve für mindestens 24 Stunden Dauerbetrieb in völliger Dunkelheit aufbauen kann. Bei völliger Entleerung des Accus, z.B. wenn er für Tage in einem dunklen Schrank gelegen hatte, muss der Transponder auch bei geringer Beleuchtung sofort voll funktionsfähig sein. Dass diese Forderungen im Ausführungsbeispiel erfüllt wurden, soll folgendes Rechenbeispiel zum Ausführungsbeispiel erläutern:

### Vorab müssen zur Abschätzung noch folgende Annahmen getroffen werden:

Zur Einsparung von Sendeleistung pro Zeiteinheit sollte die Übertragung der optischen Information so kurz wie möglich sein. Aufwendige optische Bündelungssysteme, also Linsen oder Hohlspiegel für den Empfang werden aus Kostengründen vermieden. Eine brauchbare Detektionsempfindlichkeit bei geringen Kosten kann durch den Einsatz einer preiswerten Photodiode, z.B. einer BPW 34 von Osram erreicht werden. Die obere Grenzfrequenz einer solchen Photodiode liegt mit vertretbarem Elektronikaufwand bei ca. 25 MHz. Dies entspricht einer noch einwandfrei zu detektierenden Pulsbreite von 20 Nanosekunden. Geht man von einer Datenübertragung aus, bei der eine "0" mit einem optischen Impuls von 20 ns Breite und eine "1" mit der doppelten Zeit, also 40 ns übertragen wird, mit einer Spiegelung jedes zweiten Datenwortes (aus 0 wird 1, aus 1 wird 0), kann mit einer festen durchschnittlichen Pulslänge von je 30 ns gerechnet werden. Selbstverständlich kann jedes andere geeignete Codierverfahren verwendet werden, wesentlich ist nur, dass das Datenwort in einer sehr kurzen Sendezeit, z.B. unter 1 µs, übertragen werden kann. Die kurze Sendezeit hat noch einen weiteren Vorteil: die spektralen Anteile liegen z.B. in einem Frequenzbereich oberhalb 10 MHz, also außerhalb des allgemein zu erwartenden optischen Störspektrums.

Alternativ zu dem genannten Codierverfahren eines Datenwortes ist die Übertragung gleicher Signale für "0" und "1" mit unterschiedlicher nachgeschalteter Pausenlänge als Unterscheidungsmerkmal vorgesehen. Vorteil dieser Variante ist der gleichbleibende, energiesparende Verbrauch bei der Datenübertragung. Die Übertragungszeiten der optischen Impulse liegen unter 100 ns, vorzugsweise 20 ns bis 50 ns. Geht man davon aus, dass das Signal für die "0" und für die "1" mit einer optischen Impulsbreite von 20 ns übertragen wird und der "0" eine Pause von 30 ns folgt, ist der "1" eine doppelte Pausenlänge von 60 ns zugeordnet.

Gehen wir mit dem ersten Codierverfahren davon aus, dass ein 24 Bit Datenwort 10 mal in der Sekunde übertragen wird. Die Gesamtsendezeit pro Sekunde für dieses Datenwort beträgt dann 24 x 30ns x 10, also 7,2 µs pro Sekunde. Umgerechnet auf eine Stunde ergibt sich dann eine Sendelänge von 25,92 Millisekunden.

Eine Solarzelle, im Ausführungsbeispiel bestehend aus acht hintereinandergeschalteten Photodioden (Fig. 2, 2.1) des Typs BPW 34, erzeugt bei mäßiger Beleuchtung in etwa 100 µA bei einer Spannung unter Last von ca. 3,0 V. Die Versorgungsspannung (2.8) des Transponders liegt bei 2 - 3 V. Geht man bei einer täglichen Beleuchtung im schlechtesten Falle von 4 Stunden aus, ergibt sich ein Gesamtstrom pro Tag von 400 µA. Umgerechnet auf die Stunde entspricht dies einem durchschnittlichen Strom von 16,6 µA. Zur Speicherung der in den 4 Stunden anfallenden Energiemenge ist ein sehr kleiner Akku oder entsprechender Kondensator (2.3) vorgesehen. Der Wirkungsgrad des Speichermediums ist abhängig von der verwendeten Technologie, kann jedoch bis auf 70% heruntergehen, so dass von den errechneten 16.6 µA/Std. im schlechtesten Fall noch 12 µA/Std. zur Verfügung stehen.

Ein Taktgenerator 2.4 mit der Frequenz von 10 Hz regt die Datenübertragung an. Für ihn kann 0,25 µA dauerhaft angerechnet werden. Die optische Datenübertragung wird also 10 mal in der Sekunde aktiviert und sendet jeweils ein komplettes Datenwort. Am Ende jeder Datenübertragung schaltet sich die dafür vorgesehene Elektronik bis zur nächsten Aktivierung selbst stromfrei.

Zur Generierung des Datenwortes alle 100 ms wird die Sendestufe 2.7 für je 1.5 µs aktiviert. Die längere Zeitdauer gegenüber der reinen Sendezeit der ausgesandten Lichtdaten resultiert aus dem durchschnittlich 50%igen Puls-Pause Verhältnis. Der Stromverbrauch der Sendeelektronik - ohne den Strom durch die LED - ist wegen der benötigten schnellen Komponenten relativ hoch, er lag im Ausführungsbeispiel bei 25 mA. Insgesamt errechnet sich hierbei eine Zeit von 54 ms pro Stunde, sodass der durchschnittliche Strom der Sendeelektronik - ohne den Strom durch die LED - 0,375µA beträgt.

Nach der Datenübertragung wird die Empfängerstufe 2.14 aktiviert. Sie soll wiederum ein 24 Bit Datenwort empfangen können. Die Zeitdauer des eigentlichen Empfangsvorganges beträgt bei 24 Bit mit einer durchschnittlichen Länge von 30 ns dann je 60 ns pro Bit, da bei einem Puls-Pause Verhältnis von 50% die doppelte Zeit der reinen Sendeleistung eingerechnet wird. Entsprechend beträgt die Empfangszeit pro Datenwort 1,44 µs. Nach dem Einschalten der Empfangsstufe ist diese wegen der Umladevorgänge in den elektrischen Kapazitäten nicht sofort empfangsbereit. Daher wird die Empfangsstufe 2.14 schon 0,5 µs eher aktiviert, wodurch sich eine Gesamtempfangszeit von ca. 2 µs pro Datenwort ergibt. Auf die Stunde umgerechnet ergibt sich somit eine Gesamtzeit von 72 ms. Der Stromverbrauch der Empfangseinheit lag im Ausführungsbeispiel bei 18 mA. Umgerechnet auf die 72 ms wird also zum Empfangen von 10 x 24 Bit/sec. ein Strom von 0,36 µA benötigt. Ein nicht zu beseitigender Reststrom in den nicht abschaltbaren Elektronikkomponenten im schlechtesten Fall von 0.4 µA muss noch zusätzlich eingerechnet werden. Die Ladeelektronik 2.2 mit der Vorzugsberechtigung für den Transponderbetrieb verbraucht dauerhaft 0,55 µA.

**Zusammengenommen ergibt sich ein durchschnittlicher Stromverbrauch der Elektronik zu:**

| | |
|---|---|
| Taktgenerator: | 0.25 µA |
| Sendeelektronik: | 0.375 µA |
| Empfangselektr.: | 0.36 µA |
| Ladeelektronik: | 0.55 µA |
| Reststrom: | 0.4 µA |
| | = 1.935 µA |

Zieht man diesen Strom von den zur Verfügung stehenden 12 µA ab, so verbleiben ca. 10 µA für die reine optische Sendeleistung. 10µA/Std. umgerechnet auf 25,92 ms pure Sendezeit pro Stunde ergibt dann einen Pulsstrom von immerhin 1,388 Ampere durch die Leuchtdiode. Diese Leistung reicht aus, um eine Reichweite der optischen Datenübertragung von mehreren Metern bei einem Abstrahlwinkel von +/- 45 Grad zu erreichen. Als Sender dient dabei eine handelsübliche kleine IR-LED 1.3 ohne weitere Optik.

Bei Verwendung einer Photodiode mit z. B. 8 mm² Fläche (BPW 34 o.ä.) kann auf Grund der hohen Lichtleistung des Senders im Transponder auch bei der Photodiode in der stationären Sicherheitseinrichtung auf eine Optik verzichtet werden. Selbstverständlich ist es jedoch jederzeit möglich, den Sende- oder Erfassungsbereich entsprechend den Anforderungen mittels der Wahl geeigneter optischer Bauteile zum Beispiel mit integrierter oder vorgeschalteter Linsenstruktur einzuschränken bzw. die Reichweite zu erhöhen.

Durch diese Maßnahmen kann in der Praxis ein optisch programmierbarer optischer Transponder mit einem durchschnittlichen Stromverbrauch von nur 12 µA bei einer Betriebsspannung von 2 - 3 V und einer Reichweite von 6 m erstellt werden.

Gemäß Fig.10 kann der optische Transponder 1.1 auch für den Einsatz bei bekannten, nicht optisch arbeitenden Systemen verwendet werden. Dazu wird an der Einrichtung zur Erfassung und/oder Steuerung einer Zugangsberechtigung wie z.B. an einem Kartenleser 10.2 ein Konvertierungsmodul 10.1 vorgesehen, das zur Kommunikation mit dem Identifikationselement geeignet ist. Dort werden die vom optischen Transponder 1.1 optisch übermittelten Daten in Daten gewandelt, die von einem standardmäßigen Zugangskontrollmittel lesbar sind und/oder die von einem standardmäßigem Zugangskontrollmittel ausgesendeten Daten in optisch an den optischen Transponder übermittelbare Daten gewandelt. Dadurch kann das System günstig mit bekannten Systemen gekoppelt werden. Gleichzeitig können auch weiterhin bekannte Identifikationselemente wie Magnetkarten 10.3 verwendet werden und weiterhin parallel durch das Konvertierungsmodul 10.1 hindurch erkannt werden.

Bei Update einer bestehenden RFID-Anlage trägt ein User, zum Beispiel zum Umstellen von seiner bestehenden Magnetkarte auf einen optischen Transponder, den optischen Transponder, der noch keine Zuordnung in der RFID-Anlage hat. Um das optische Transponderelement zu identifizieren, nutzt der User zum Beispiel an einer Zugangstür mit bereits bestehendem RFID-System und der Zusatzeinrichtung des optischen Transponderlesegeräts in Form des Konvertierungsmoduls 10.1 wie gewohnt seine magnetische RFID-Karte (Magnetkarte 10.3). Die Zusatzeinrichtung des optischen Transponderlesegeräts liest die ID-Nummer des optischen Transponder-Namensschilds 1.1 und legt diese ID-Nummer zusammen mit der vom magnetischen RFID-System gelesenen ID-Nummer in einer Liste ab. Bei einem zweiten Durchschreiten der Tür wird die ID-Nummer des optischen Transponders gelesen und aus der entsprechenden Liste wird die zugehörige RFID-Nummer ausgegeben und dem RFID-Kartenleser 10.2 übermittelt. Dies kann mit Hilfe von magnetischer Induktion oder unter Nutzung der Schnittstelle zwischen RFID-Kartenleser und der zentralen Steuereinheit geschehen. Mit diesem Vorgang wird ein aufwendiges Anpassen der bestehenden systemspezifischen Infrastruktur sowie eine Programmierung des optischen Transponders vermieden.

**Bezugszeichenliste**

| | | | |
|---|---|---|---|
| 1.1 | optischer Transponder in Form eines Namensschildes | 5.4 | Zeitraum Aktivierung Empfangseinheit |
| 1.2 | Raum für Solarzelle | 5.5 | empfangenes Signal im Transponder |
| 1.3 | optisches Sendeelement, z.B. LED | | |
| 1.4 | Photodiode | 6.1 | Kurve für Leistungsverbrauch Sendestufe |
| 1.5 | Namensschild Seitenansicht | | |
| 2.1 | Solarzelle, bestehend aus 8 Photodioden | 6.2 | Kurve für Leistungsverbrauch Empfangsstufe |
| 2.2 | Ladeschaltung mit Vorzugsberechtigung | 7.1 | lange Sendepulse der stationären Sicherheitseinrichtung |
| 2.3 | Accu | 7.2 | Empfangssignal der stationären Sicherheitseinrichtung |
| 2.4 | Taktgenerator | | |
| 2.5 | Datenwortgenerierung / Steuerschaltung | 8.1 | Empfangssignal des Transponders |
| 2.6 | Empfangene Daten | 8.2 | vom Transponder ausgesandtes Datenwort |
| 2.7 | LED-Treiberstufe | 9.1 | Photodiode der stationären Sicherheitseinrichtung |
| 2.8 | geschaltete Stromversorgung | | |
| 2.9 | Aktivierung für Datenwort | 9.2 | Empfangselektronik der stationären Sicherheitseinrichtung |
| 2.11 | Datenwort | | |
| 2.12 | Spannungsversorgung für den Taktgenerator | 9.3 | Datenverarbeitung |
| | | 9.4 | Sendestufe der stationären Einheit |
| 2.13 | Aktivierung für Empfangseinheit | 9.5 | aussendendes Element, LED |
| 2.14 | Transponder-Empfangseinheit | 9.7 | Datenkommunikation mit Zentralrechner |
| 3.2 | Spannungsverlauf an der Solarzelle ohne Belastung | | |
| 3.5 | Aktivierungspunkt für Ladestrom | 9.9 | Datenkommunikation mit Steuerelektrik |
| 3.4 | Ladestrom für den Accu | 10.1 | Konvertierungsmodul |
| 4.1 | empfangenes Signal | 10.2 | Kartenleser |
| 4.2 | Zeitabschnitt für Sendephase | 10.3 | Magnetkarte |
| 4.3 | gesendetes Datenwort | | |
| 5.1 | Zeitabschnitt zur Erzeugung des Datenwortes | | |
| 5.3 | Datenwort | | |

## Patentansprüche

1. Identifikationselement, mit einem Transponder (1.1) mit einer Daten aussendenden Sendeeinheit und mit einer Daten empfangenen Empfangseinheit zur Kommunikation mit einer Einrichtung zur Erfassung und/oder Steuerung einer Zugangsberechtigung zu Räumen oder Objekten, sowie mit einer Steuerschaltung (2.5) für eine Sendeeinheit und eine Empfangseinheit,
wobei der Transponder ein optischer Transponder (1.1) ist, dessen Sendeeinheit eine Licht aussendende Sendeeinheit (1.3) ist, die kontinuierlich zumindest zeitabschnittsweise optische Signale selbsttätig aussendet, und
mit einer autarken Energieversorgung, wobei der optische Transponder und die autarke Energieversorgung im Identifikationselement integriert sind, und
wobei das Identifikationselement die Form eines Namensschilds oder eines einem Objekt oder Körper zugeordneten oder an diesem zu tragenden Identifikationselements vergleichbarer Größe hat,
**dadurch gekennzeichnet, dass** die Sendeeinheit (1.3) des optischen Transponders (1.1) von der Steuerschaltung (2.5) so betrieben ist, dass sie mehrmals pro Sekunde optische Impulse kleiner gleich 100 Nanosekunden sendet,
dass die Empfangseinheit eine Daten mittels Licht empfangende, von der Steuerschaltung angesteuerte Empfangseinheit (1.4) ist,
und dass die autarke Energieversorgung keine Batterie ist.

2. Identifikationselement nach Anspruch 1, **dadurch gekennzeichnet, dass** wenigstens eine Solarzelle (2.1) die autarke Energieversorgung bildet.

3. Identifikationselement nach Anspruch 2, **dadurch gekennzeichnet, dass** der wenigstens einen Solarzelle (2.1) eine Ladeschaltung (2.2) zur Ladung eines gegenüber der Steuerschaltung (2.5) nachrangig zu ladenden Akkus (2.3) zugeordnet ist, die bei leerem Akku (2.3) die Sendeeinheit (1.3) und ggf. die Empfangseinheit (1.4) bevorzugt vor der Aufladung des Akkus mit Energie versorgt.

4. Identifikationselement nach einem der vorhergehenden Ansprüche, **dadurch gekennzeichnet, dass** die Steuerschaltung (2.5) die Empfangseinheit (1.3) so ansteuert, dass sie für einen bestimmten Zeitabschnitt nach Aussenden eines Datensignals wirksam geschalten ist.

5. Identifikationselement nach einem der vorhergehenden Ansprüche, **dadurch gekennzeichnet, dass** der optische Transponder (1.1) eine Speichereinheit und eine Programmiereinrichtung aufweist.

6. Identifikationselement nach Anspruch 5, **dadurch gekennzeichnet, dass** die Speichereinheit durch die Programmiereinrichtung in Folge der durch die Empfangseinheit (1.3) empfangenen Daten beeinflussbar ist und gegebenenfalls die Daten des optischen Transponders (1.1) durch die Steuerschaltung veränderbar sind.

7. Identifikationselement nach einem der vorhergehenden Ansprüche, **dadurch gekennzeichnet, dass** Daten insbesondere des optischen Transponders (1.1) durch eine bidirektionale Kommunikation mit der Einrichtung zur Erfassung und/oder Steuerung der Zugangsberechtigung beeinflussbar sind.

8. Identifikationselement nach einem der vorhergehenden Ansprüche, **dadurch gekennzeichnet, dass** optische Signale für die Datenwörter "0" und "1" die gleiche Signallänge aufweisen.

9. Identifikationselement nach Anspruch 8, **dadurch gekennzeichnet, dass** die Signallänge weniger als 100 ns, vorzugsweise zwischen 20 ns und 50 ns beträgt.

10. Identifikationselement nach Anspruch 8 oder 9, **dadurch gekennzeichnet, dass** die optischen Signale für die Datenwörter "0" und "1" sich durch die nachgeschaltete Pause unterscheiden.

11. Identifikationselement nach einem der Ansprüche 8 bis 10, **dadurch gekennzeichnet, dass** der "0" folgt eine im Verhältnis zur Pause nach der "1" kurze Pause folgt, wobei die Pause nach der "0" vorzugsweise 30 ns und die Pause nach der "1" vorzugsweise 60 ns beträgt.

## Claims

1. An identification element comprising a transponder (1.1) incorporating a data sending transmitter unit and a data receiving receiver unit for communication with a device for detecting and/or controlling access authorisation to areas or objects, and a control circuit (2.5) for a transmitter unit and a receiver unit,
wherein the transponder is an optical transponder (1.1), whose transmitter unit is a light emitting transmitter unit (1.3) which automatically sends out optical signals continuously at least periodically, and
comprising an autonomous power supply, wherein the optical transponder and the autonomous power supply are integrated into the identification element, and wherein the identification element is in the form of a name tag or an identification element of comparable size which is associated with or is to be carried on an object or a body,
**characterized in that** the transmitter unit (1.3) of the optical transponder (1.1) is operated by the control circuit (2.5) in such a manner that it sends out optical pulses of less than or equal to 100 nanoseconds several times per second,
that the receiver unit is a receiver unit (1.4), that receives data by means of light and is controlled by the control circuit (2.5),
and **in that** the autonomous power supply is no battery.

2. An identification element in accordance with Claim 1, **characterized in that** at least one solar cell (2.1) forms the autonomous power supply.

3. An identification element in accordance with Claim 2, **characterized in that** a charging circuit (2.2) for charging a rechargeable battery (2.3) or accumulator, that is to be charged lower-ranking relative to the control circuit (2.5), is associated with the at least one solar cell (2.1), said charging circuit supplying energy preferentially to the transmitter unit (1.3) and, if present, the receiver unit (1.4) when the rechargeable battery (2.3) or accumulator is flat prior to supplying energy for charging the rechargeable battery or accumulator.

4. An identification element in accordance with any of the preceding Claims, **characterized in that** the control circuit (2.5) controls the receiver unit (1.3) in such a way that it is switched to be active for a certain time period after sending of a data signal.

5. An identification element in accordance with any of the preceding Claims, **characterized in that** the optical transponder (1.1) comprises a memory unit and a programming device.

6. An identification element in accordance with Claim 5, **characterized in that** the memory unit can be influenced by the programming device as a consequence of the data received by the receiver unit (1.3) and optionally the data in the optical transponder (1.1) can be changed by the control circuit.

7. An identification element in accordance with any of the preceding Claims, **characterized in that** data in the optical transponder (1.1) in particular can be influenced by bi-directional communication with the device for detecting and/or controlling the access authorization.

8. An identification element in accordance with any of the preceding Claims, **characterized in that** optical signals for the data words "0" and "1" have the same signal lengths.

9. An identification element in accordance with Claim 8, **characterized in that** the signal length amounts to less than 100 ns, preferably to between 20 ns and 50 ns.

10. An identification element in accordance with Claim 8 or 9, **characterized in that** the optical signals for the data words "0" and "1" are distinguished by the subsequent break.

11. An identification element in accordance with any of the Claims 8 to 10, **characterized in that** the break following the "0" is short in relation to the break after the "1", wherein the break after the "0" preferably amounts to 30 ns and the break after the "1" to preferably 60 ns.

## Revendications

1. Un élément d'identification comportant un transpondeur (1.1), une unité d'émission émettant des données et une unité de réception recevant des données en vue d'une communication avec un dispositif d'acquisition et/ou de commande d'une autorisation d'accès à des pièces ou à des objets, ainsi qu'un circuit de commande (2.5) pour une unité d'émission et une unité de réception,
dans lequel le transpondeur est un transpondeur optique (1.1) dont l'unité d'émission est une unité d'émission émettant de la lumière (1.3), qui émet continuellement de manière autonome au moins par intermittence des signaux optiques, et
une source d'énergie autonome, le transpondeur optique et la source d'énergie autonome étant intégrés dans l'élément d'identification, et
dans lequel l'élément d'identification a la forme d'un badge ou d'un élément d'identification de taille comparable associé à un objet ou à un corps ou qui doit être porté par ces derniers,
**caractérisé en ce que** l'unité d'émission (1.3) du transpondeur optique (1.1) est actionnée par le circuit de commande (2.5) de telle sorte qu'elle envoie plusieurs fois par seconde des impulsions optiques inférieures ou égales à 100 nanosecondes,
**en ce que** l'unité de réception est une unité de réception (1.4) commandée par le circuit de commande, recevant des données de manière optique,
et **en ce que** la source d'énergie autonome n'est pas une batterie.

2. Elément d'identification selon la revendication 1, **caractérisé en ce qu'**au moins une cellule solaire (2.1) forme la source d'énergie autonome.

3. Elément d'identification selon la revendication 2, **caractérisé en ce qu'**un circuit de chargement (2.2) est associé à la cellule solaire (2.1) au moins, en vue du chargement d'un accumulateur (2.3) à charger en aval du circuit de commande (2.5), lequel circuit de commande alimente de préférence l'unité d'émission (1.3) et le cas échéant l'unité de réception (1.4) lorsque l'accumulateur (2.3) est déchargé, avant de recharger l'accumulateur.

4. Elément d'identification selon l'une des revendications précédentes, **caractérisé en ce que** le circuit de commande (2.5) commande l'unité de réception (1.3) de telle manière qu'elle soit commandée efficacement pendant une durée déterminée après l'émission d'un signal de données.

5. Elément d'identification selon l'une des revendications précédentes, **caractérisé en ce que** le transpondeur optique (1.1) comprend une unité de mémoire et un dispositif de programmation.

6. Elément d'identification selon la revendication 5, **caractérisé en ce que** l'unité de mémoire est susceptible d'être influencée par le dispositif de programmation suite aux données reçues par l'unité de réception (1.3) et le cas échéant les données du transpondeur optique (1.1) sont modifiables par le circuit de commande.

7. Elément d'identification selon l'une quelconque des revendications précédentes, **caractérisé en ce que** des données, en particulier du transpondeur optique (1.1), sont susceptibles d'être influencées par une communication bidirectionnelle avec le dispositif d'acquisition et/ou de commande de l'autorisation d'accès.

8. Elément d'identification selon l'une des revendications précédentes, **caractérisé en ce que** les signaux optiques comprennent la même longueur de signal pour les données « 0 » et « 1 ».

9. Elément d'identification selon la revendication 8, **caractérisé en ce que** la longueur de signal s'élève à moins de 100 ns est de préférence comprise entre 20 ns et 50 ns.

10. Elément d'identification selon la revendication 8 ou 9, **caractérisé en ce que** les signaux optiques se différencient pour les données « 0 » et « 1 » par la pause qui les suit.

11. Elément d'identification selon l'une des revendications 8 à 10, **caractérisé en ce que** le « 0 » suit une pause courte par rapport à la pause suivant le « 1 », la pause après le « 0 » étant de préférence de 30 ns et la pose après le «1 » de préférence de 60 ns.
